# EUROPÄISCHE PATENTANMELDUNG

(11) **EP 4 528 236 A1**
(43) Veröffentlichungstag der Anmeldung: **26.03.2025**
(21) Anmeldenummer: 24192348.1
(22) Anmeldetag: 01.08.2024
(51) Int. Cl.: G01F 23/296, G01F 23/80, G01F 25/20

(54) **VIBRONISCHES MESSGERÄT UND VERFAHREN ZUR SIGNALVERARBEITUNG IN EINEM SOLCHEN MESSGERÄT**

(30) Priorität: 21.09.2023 DE 102023125689
(71) Anmelder: VEGA Grieshaber KG, 77709 Wolfach (DE)
(72) Erfinder: Wöhrle, Matthias, 77793 Gutach (DE); Schätzle, Benjamin, 77978 Schuttertal (DE)
(74) Vertreter: Patentanwälte Bauer Vorberg Kayser

(57) **Zusammenfassung**

Die vorliegende Erfindung beschreibt ein vibronisches Messgerät (2), insbesondere Grenzstandsensor (2) zur Bestimmung und/oder Überwachung mindestens einer Prozessgröße eines Mediums (3) in einem Behälter (1), mit mindestens einer mechanisch schwingfähigen Einheit (40), mit mindestens einer Antriebs- und Empfangseinheit (31) zur Anregung der mechanisch schwingfähigen Einheit (40) zu mechanischen Schwingungen mittels eines elektrischen Anregungssignals S_{A} und zum Empfangen und Umwandeln von mechanischen Schwingungen in ein elektrisches Empfangssignal S_{E}, und mit mindestens einer Regel- und Auswerteeinheit (30) zur Regelung und/ oder Steuerung der Schwingungsanregung und zur Auswertung des Empfangssignals S_{E} in Bezug auf die Prozessgröße, wobei das vibronische Messgerät (2) wenigstens einen Vibrationssensor (20) aufweist, der derart mit dem vibronischen Messgerät (2) gekoppelt ist, dass Schwingungen von dem Messgerät (2) auf den Vibrationssensor (20) übertragen werden, wobei an dem Vibrationssensor (20) ein Sensorsignal Ss abgreifbar ist, **dadurch gekennzeichnet, dass** das vibronische Messgerät (2) eine Analyseeinheit (32) aufweist, die mit der Regel- und Auswerteeinheit (30) verbunden ist, wobei der Analyseeinheit (32) das elektrische Empfangssignal S_{E} und das Sensorsignal Ss als Eingangssignale zugeführt sind, die Analyseeinheit (32) als Einheit zur selbstlernenden Analyse der ihr zugeführten Eingangssignale ausgebildet ist und die Analyseeinheit (32) der Regel- und Auswerteeinheit (30) wenigstens eine Zuverlässigkeitsinformation für das elektrische Empfangssignal S_{E} übermittelt, wobei.

## Beschreibung

Die vorliegende Erfindung betrifft ein vibronisches Messgerät gemäß dem Obergriff des Patentanspruchs 1 sowie ein Verfahren zur Signalverarbeitung in einem solchen vibronischen Messgerät gemäß dem Oberbegriff des Patentanspruchs 10.

Aus dem Stand der Technik sind Vibrationssensoren, auch als vibronische Sensoren oder Vibrationsgrenzstandsensoren genannt, mit piezoelektrischen Sende- und/oder Empfangseinrichtungen bekannt. Piezoelektrische Sende- und/oder Empfangseinrichtungen werden in Vibrationssensoren, die häufig in der Füllstandmesstechnik als Grenzstandsensoren zum Einsatz kommen, als Sende- und/oder Empfangseinrichtung eingesetzt. Häufig werden solche piezoelektrischen Sende- und/oder Empfangseinrichtungen auch als Antrieb bezeichnet.

Vibrationssensoren gemäß der vorliegenden Anmeldung, insbesondere Vibrationsgrenzstandschalter für Flüssigkeiten und Schüttgüter arbeiten nach dem Prinzip der Resonanzfrequenzverschiebung und/ oder werfen eine Schwingungsamplitude aus. Der Vibrationssensor schwingt je nach Bedeckungszustand, Dichte und Temperatur des Mediums mit einer anderen Resonanzfrequenz und Amplitude. Die Amplitude der Resonanzfrequenz ist dabei von der Viskosität des Mediums abhängig. Die Frequenzverschiebung ist von der Dichte und Temperatur des Mediums abhängig. Zur Grenzstandüberwachung werden solche Sensoren in Behältern in Höhe eines zu überwachenden Füllstandes montiert und geben auf Basis der vorstehenden Parameter eine Zustandsinformation aus. Konkret ist an den Sensoren eine Information abgreifbar, ob der Sensor bedeckt oder unbedeckt, respektive ob ein Füllstand des Mediums den zu überwachenden Füllstand erreicht hat (bedeckt) oder unterschritten hat (unbedeckt).

Typischerweise weist der Vibrationssensor eine über einen solchen Antrieb zu einer Schwingung anregbare Membran auf, mittels der ein an der Membran angeordneter mechanischer Schwinger als mechanische schwingfähige Einheit zu einer Schwingung anregbar ist. Abhängig von einem Bedeckungsstand des mechanischen Schwingers mit einem Füllgut sowie abhängig von der Viskosität dieses Füllgutes, schwingt der mechanische Schwinger mit einer charakteristischen Frequenz, die von dem Vibrationssensor detektiert wird und in ein Messsignal umgewandelt werden kann.

DE 10 2012 101 667 A1 betrifft ein vibronisches Messgerät zur Bestimmung und/oder Überwachung mindestens einer Prozessgröße eines Mediums in einem Behälter, mit mindestens einer mechanisch schwingfähigen Einheit, mit mindestens einer piezoelektrischen Antriebs- und Empfangseinheit zur Anregung der mechanisch schwingfähigen Einheit zu mechanischen Schwingungen mittels eines elektrischen Anregungssignals und zum Empfangen und Umwandeln von mechanischen Schwingungen in ein elektrisches Empfangssignal, und mit mindestens einer Regel- und Auswerteeinheit zur Regelung und/oder Steuerung der Schwingungsanregung und zur Auswertung des Empfangssignals in Bezug auf die Prozessgröße. Bei der Prozessgröße handelt es sich beispielsweise um den Füllstand, insbesondere einen Grenzstand, die Dichte, die Viskosität oder den Durchfluss eines flüssigen Mediums, oder um den Füllstand eines Schüttguts. Die Regel- und Auswerteeinheit gemäß der Offenbarung in DE 10 2012 101 667 A1 ist dazu konfiguriert, bei Vorliegen mindestens einer Fremdvibration in Abhängigkeit der Frequenz und/oder der Amplitude der Fremdvibration die Schwingungsanregung derart zu steuern, dass das Empfangssignal von der Fremdvibration im Wesentlichen ungestört ist und/oder mindestens eine Frequenz einer Fremdvibration in dem Empfangssignal zu unterdrücken.

An dem vorgenannten Messgerät wird gemäß einer Ausgestaltung des Verfahrens die Fremdvibration detektiert, indem die Anregung der mechanisch schwingfähigen Einheit zu Schwingungen unterbrochen und das Empfangssignal während der Unterbrechung ausgewertet wird. Dies wird als nachteilig empfunden, da so eine durchgängige Messung nicht möglich ist.

In einer alternativen Ausgestaltung des Verfahrens wird die Fremdvibration mittels eines Vibrationssensors detektiert, welcher an dem Behälter, in oder an dem Messgerät, oder an einer mit dem Behälter verbundenen Komponente angeordnet ist. Vorzugsweise ist der Vibrationssensor an dem Prozessanschluss des Messgeräts befestigt.

Grundsätzlich stellt die zweite Alternative eine verbesserte Ausgestaltung dar, da so eine Unterbrechung der Messung vermieden werden kann. Die Zuverlässigkeit und Sicherheit der Erkennung einer Fremdschwingung mit diesem System wird aber nach wie vor als unzureichend angesehen.

Fremdschwingungen, die zu nahe an der Frequenz der Grundmode des Anregungssignals und/oder des Nutzsignals des vibronischen Messgeräts liegen, können so nicht zuverlässig erkannt werden.

Ferner ist die vorgeschlagene Lösung, die Schwingungsanregung durch ein Verändern der Anregungsfrequenz zu steuern, dass das Empfangssignal im Wesentlichen ungestört von der Fremdvibration ist, technisch schwierig umsetzbar, da die Resonanzfrequenz der mechanisch schwingfähigen Einheit von deren Geometrie und dem die Einheit umgebenden Medium abhängt und durch eine Veränderung der Anregung nicht geändert werden kann. Die Anregung höherer Schwingungsmoden ist zwar möglich, bei einer Fremdvibration auf oder in der Nähe der Resonanzfrequenz der Hauptmode ist die Amplitude dieser höheren Schwingungsmoden aber so gering, dass in der Praxis eine Signalauswertung nicht oder nur unzureichend möglich ist.

Es ist die Aufgabe der vorliegenden Erfindung, ein vibronisches Messgerät sowie ein Verfahren zur Signalverarbeitung in einem vibronischen Messgerät zur Verfügung zu stellen, das eine verbesserte Signalverarbeitung, insbesondere Erkennung und vorzugsweise Unterdrückung von Fremdschwingungen ermöglicht.

Diese Aufgabe wird durch ein vibronisches Messgerät mit den Merkmalen des Patentanspruchs 1 sowie durch ein Verfahren zur Signalverarbeitung in einem vibronischen Messgerät mit den Merkmalen des Patentanspruchs 10 gelöst. Vorteilhafte Weiterbildungen sind Gegenstand der abhängigen Patentansprüche sowie der nachfolgenden Beschreibung.

Ein erfindungsgemäßes vibronisches Messgerät zur Bestimmung und/oder Überwachung mindestens einer Prozessgröße eines Mediums in einem Behälter, mit mindestens einer mechanisch schwingfähigen Einheit, mit mindestens einer Antriebs- und Empfangseinheit zur Anregung der mechanisch schwingfähigen Einheit zu mechanischen Schwingungen mittels eines elektrischen Anregungssignals und zum Empfangen und Umwandeln von mechanischen Schwingungen in ein elektrisches Empfangssignal, weist mindestens einer Regel- und Auswerteeinheit zur Regelung und/ oder Steuerung der Schwingungsanregung und zur Auswertung des Empfangssignals in Bezug auf die Prozessgröße auf. Das vibronische Messgerät weist ferner wenigstens einen Vibrationssensor auf, der derart mit dem vibronischen Messgerät gekoppelt ist, dass Schwingungen von dem Messgerät auf den Vibrationssensor übertragen werden, wobei an dem Vibrationssensor ein Sensorsignal abgreifbar ist. Erfindungsgemäß weist das vibronische Messgerät eine Analyseeinheit auf, die mit der Regel- und Auswerteeinheit verbunden ist, wobei der Analyseeinheit das elektrische Empfangssignal und das Sensorsignal als Eingangssignale zugeführt sind, die Analyseeinheit als Einheit zur selbstlernenden Analyse der ihr zugeführten Eingangssignale ausgebildet ist und wobei die Analyseeinheit der Regel- und Auswerteeinheit wenigstens eine Zuverlässigkeitsinformation für das elektrische Empfangssignal übermittelt.

Das erfindungsgemäße vibronische Messgerät ist damit befähigt, die ihr zugeführten Eingangssignale, vorliegend wenigstens das Empfangssignal der Antriebs- und Empfangseinheit und das Sensorsignal des Vibrationssensors zu analysieren und selbstlernend eine Zuverlässigkeitsinformation für das Empfangssignal zu generieren. Diese Zuverlässigkeitsinformation kann insbesondere eine Aussage darüber enthalten, ob bzw. inwieweit eine von der Regel- und Auswerteeinheit aus dem Empfangssignal extrahierte Information zu der Prozessgröße als zuverlässig zu bewerten ist.

Das vibronische Messgerät wird hierzu durch die Analyseeinheit befähigt, die vorzugsweise als mittels geeigneter Trainingsdaten trainierte KI-Einheit ausgebildet ist. Die KI-Einheit kann vorzugsweise als künstliches neuronales Netz ausgebildet sein, dem je nach Ausgestaltung der vorliegenden Erfindung verschiedene Eingangsdaten zugeführt werden, wobei auf Basis dieser Eingangsdaten eine Aussage über die Zuverlässigkeit der Eingangsdaten ermittelt wird.

Das künstliche neuronale Netz kann bspw. als Multi Layer Perceptron, d.h. Feed Forward Neuronal Network ausgebildet sein.

Vibrationssensoren gemäß der vorliegenden Erfindung können Vibrationssensoren, Beschleunigungssensoren und auch Inertial Messeinheiten sein. Eine Inertial Messeinheit weist zur Erfassung der sechs möglichen kinematischen Freiheitsgrade drei jeweils aufeinander orthogonal stehende Beschleunigungssensoren (Translationssensoren) für die Erfassung der translatorischen Bewegung in x-, y- und z-Richtung sowie drei orthogonal zueinander ausgerichtete Drehratensensoren (Gyroskopische Sensoren) für die Erfassung von Rotationsbewegungen um die x-, y- bzw. z-Achse auf.

Sowohl die Antriebs- und Empfangseinheit als auch der Beschleunigungssensor werden mit einer Überlagerung aus Vibrationen, die aus der Messung selbst resultieren, also der Schwingung, die durch die Antriebseinheit in der mechanisch schwingfähigen Einheit hervorgerufen wird, und Fremdschwingungen, die bspw. über den Behälter auf das vibronische Messgerät einkoppeln, beaufschlagt. Die Empfangseinheit "sieht" diese Überlagerung aber durch den mechanischen Filter der mechanisch schwingfähigen Einheit und kann daher eine Richtung der resultierenden Schwingung nur begrenzt detektieren. Der Vibrationssensor dagegen kann die Schwingung ungefiltert aufnehmen und damit zusätzliche Informationen ableiten.

Bevorzugt sind Systeme, die die Richtung, den Betrag und die Frequenz von auf den Sensor wirkenden Beschleunigungen messen können, sodass möglichst viele Informationen über mögliche Fremdschwingungen, die eine Messung beeinflussen können, erhalten werden. Der Vibrationssensor kann bspw. als Drei-Achsen-Accelerormeter oder als Gyroskop in MEMS-Technik aufgebaut sein. Durch die zusätzlichen Informationen über die Richtung und den Betrag der Beschleunigung können Fremdschwingungen besser klassifiziert und bewertet werden.

Die Analyseeinheit gemäß der vorliegenden Erfindung ist so ausgestaltet, dass die Analyse der Eingangssignale der Analyseeinheit innerhalb des vibronischen Messgeräts erfolgt, sodass keine Abhängigkeit von einer Verbindung zur Cloud, d.h. insbesondere von einer Netzwerkverbindung besteht. Weitere Vorteile einer Signalverarbeitung unmittelbar in dem Messgerät bestehen bspw. in einer kürzeren Reaktionszeit der einfacheren Gewährleistung des Datenschutzes, da die Rohdaten das Messgerät nicht verlassen.

In einer bevorzugten Ausgestaltung sind der Analyseeinheit das elektrische Empfangssignal und/oder das Sensorsignal im Zeitbereich und im Spektralbereich zugeführt. Das bedeutet, dass der Analyseeinheit entweder das Empfangssignal oder das Sensorsignal oder das Empfangssignal und das Sensorsignal sowohl im Zeitbereich als auch im Spektralbereich, d.h. nach einer Spektralanalyse zugeführt werden. Abhängig von der gewünschten Information, kann diese besser aus den Signalen im Zeitbereich oder aber im Spektralbereich ermittelt werden. Zeitliche Abläufe können bspw. besser im Zeitbereich erkannt werden, Unterschiedliche Frequenzbestandteile der Signale dagegen besser im Spektralbereich.

Die Überführung der Signale aus dem Zeit- in den Spektralbereich erfolgt durch eine Spektralanalyse. Als üblicher Algorithmus hat sich hierfür die Fouriertransformation und insbesondere die schnelle Fouriertransformation (Fast Fourier Transformation, FFT) etabliert.

Als weiteres relevantes Signal kann der Analyseeinheit ein Temperatursignal als Eingangssignal zugeführt sein. Die Temperatur hat einen wesentlichen Einfluss auf die Eigenfrequenz der mechanisch schwingfähigen Einheit und kann ohne großen Aufwand ermittelt werden. Viele vibronische Messgeräte weisen daher schon einen Temperatursensor oder eine andere Art der Temperaturbestimmung auf, sodass die Temperatur auch in der weitergehenden Signalverarbeitung in der Analyseeinheit verwendet werden kann.

Optional kann der Analyseeinheit ferner das elektrische Anregungssignal als Eingangssignal zugeführt sein. Auch das elektrische Anregungssignal kann im Zeitbereich und/oder im Spektralbereich zugeführt werden.

Die Analyseeinheit kann zur Erkennung periodischer Ereignisse ausgebildet sein. Es existieren unterschiedliche KI-Einheiten, die aufgrund der verwendeten Algorithmen und/oder aufgrund der grundsätzlichen Architektur der KI für unterschiedliche Aufgaben besonders gut geeignet sind. Zeitlich wiederkehrende Muster können bspw. von sogenannten "Rekurrenten neuronalen Netzen" oder "RNNs" (Recurrent Neural Networks) besonders gut erkannt werden. Eine derart aufgebaute KI kann bspw. periodisch wiederkehrende Ereignisse, die eine Messung stören oder beeinflussen erkennen und so das Messsystem z.B. positiv beeinflussen. Erkennt das System bspw. dass ein Befüllvorgang durch eine dann laufende Pumpe und einen Strom zufließenden Mediums die Messung regelmäßig stört, so kann bspw. unmittelbar vor dem Befüllvorgang eine Messung durchgeführt werden, sodass noch ein unverfälschter Messwert ermittelt werden kann.

In einer zusätzlichen oder alternativen Ausgestaltung ist die Analyseeinheit besonders zur Erkennung von Frequenzmustern geeignet ausgebildet. Komplexe Muster oder Strukturen können hier besonders gut von gefalteten neuronalen Netzen (Convolutional Neural Network, CNN) erkannt werden. Eine Ausgestaltung zur Erkennung von Frequenzmustern kann durch ein gefaltetes neuronales Netz erfolgen, das anstelle oder zusätzlich zu anderen KI-Einheiten oder innerhalb einer KI-Einheit als zusätzliches oder alternatives neuronales Netz ausgebildet ist.

Durch die Analyse von Frequenzmustern besteht die Möglichkeit, Verursacher von Fremdvibrationen zu erkennen. Auf Basis der Erkennung der Verursacher können geeignete Maßnahmen ergriffen werden, um einen Einfluss der Fremdvibrationen auf das Messergebnis, d.h. insbesondere eine Schaltentscheidung des vibronischen Sensors, zu verringern. Geeignete Maßnahmen zur Verringerung des Einflusses von Fremdvibrationen kann bspw. eine Anpassung der Signalfilterung, eine Vergrößerung der Anregungsamplitude oder eine Veränderung der Anregungsfrequenz derart sein, dass eine andere Eigenmode der mechanisch schwingfähigen Einheit angeregt wird. Zusätzlich oder alternativ kann das Verändern einer Schaltverzögerungen einen positiven Einfluss haben. Auf dieser Weise könnten sporadische Fehlergebnisse unterdrückt werden. Die Anpassung der Filterung kann bspw. auch das Zwischenschalten eines zusätzlichen Filters umfassen. Bspw. kann es in bestimmten Situationen sinnvoll sein, einen gleitenden Mittelwert über eine vorgebbare Anzahl an Messwerten zu berechnen. Durch eine solche Mittelwertbildung können einzelne Ausreißer bei den Messwerten ebenfalls unterdrückt werden.

Die Analyseeinheit kann ferner geeignet ausgebildet sein, basierend auf der Analyse ein Warnsignal zu generieren und auszugeben, wenn eine Qualität des Nutzsignals zu gering und damit die Wahrscheinlichkeit einer Fehlinterpretation zu hoch ist. Auf diese Weise kann das Eingangssignal in bestimmten Situationen verworfen werden, sodass Fehler vermieden werden. Insbesondere, wenn Maßnahmen zur Verringerung des Einflusses der Fremdvibrationen auf das Nutzsignal ausgeschöpft sind, kann es sinnvoll sein, eine solche Warnmeldung auszugeben. Die Warnmeldung kann zusätzlich oder alternativ zu dem Ausgangssignal ausgegeben werden. Das erhaltene Ausgangssignal kann also verworfen werden und stattdessen ein Warnsignal ausgegeben werden, oder es wird zusätzlich zu dem Ausgangssignal eine Warnung ausgegeben, die das Ausgangssignal als unzuverlässig kennzeichnet.

In einer Weiterbildung kann die Analyseeinheit der Regel- und Auswerteeinheit ein Einstellsignal zur Einstellung wenigstens eines adaptiven Filters für das Empfangssignal übermitteln. Dies kann insbesondere dann sinnvoll sein, wenn sich eine Quelle von Fremdvibrationen identifizieren lässt und charakteristische Frequenzen erzeugt, die gut filterbar sind.

In einer Variante ist die Analyseeinheit derart ausgebildet, dass sie Fremdvibrationen verursachende Ereignisse erkennt, klassifiziert und der Regel- und Auswerteeinheit einen Klassifikator zur Verfügung stellt, der die jeweilige Klasse des erkannten Ereignisses kennzeichnet. Eine solche Klassifikation kann dabei helfen, für verschiedene Klassen von Ereignissen, wobei die Ereignisse einer Klasse gleiche oder zumindest ähnliche Eigenschaften aufweisen, Gegenmaßnahmen festzulegen.

Die Regel- und Auswerteeinheit kann bspw. derart ausgebildet sein, dass sie basierend auf der Klassifikation eine Messrate und/oder eine Signalverarbeitung, insbesondere eine Filterung anpasst. Verschieden Möglichkeiten hierfür wurden weiter oben schon beschrieben.

Ein erfindungsgemäßes Verfahren zur Signalverarbeitung in einem vibronischen Messgeräts gemäß der vorstehenden Beschreibung zeichnet sich dadurch aus, dass das elektrische Empfangssignal und das Sensorsignal der Analyseeinheit als Eingangssignal zugeführt werden und die Analyseeinheit der Regel- und Auswerteeinheit wenigstens eine Zuverlässigkeitsinformation für das elektrische Empfangssignal übermittelt, wobei die Analyseeinheit die ihr zugeführten Eingangssignale selbstlernend analysiert.

In einer Weiterbildung des Verfahrens werden der Analyseeinheit das elektrische Empfangssignal und/oder das Sensorsignal im Zeitbereich und im Spektralbereich zugeführt.

Zusätzlich kann der Analyseeinheit ein Temperatursignal als weiteres Eingangssignal zugeführt werden.

In einer Ausgestaltungsform des Verfahrens führt die Analyseeinheit eine Erkennung periodischer Ereignisse durch.

In einer weiteren Ausgestaltungsform des Verfahrens führt die Analyseeinheit zusätzlich oder alternativ eine Erkennung von Frequenzmustern durch.

Es wird bevorzugt, wenn die Analyseeinheit basierend auf der Analyse ein Warnsignal generiert und ausgibt, insbesondere, wenn eine Qualität des Nutzsignals zu gering ist.

In einer Ausgestaltung gibt die Analyseeinheit ein Signal zur Einstellung wenigstens eines adaptiven Filters für das Empfangssignal an die Regel- und Auswerteeinheit weiter. Durch dieses Signal wird eine optimale Einstellung des adaptiven Filters erreicht, sodass das Nutzsignal aus dem Empfangssignal besser extrahiert werden kann.

In einer weiteren Ausgestaltung erkennt und klassifiziert die Analyseeinheit Fremdvibrationen verursachende Ereignisse und gibt eine Information darüber aus. Es kann bspw. ein Klassifikator, d.h. ein die Klasse des erkannten Ereignisses kennzeichnender Wert, ausgegeben werden. Der Klassifikator kann dann von der Regel- und Auswerteeinheit weiterverarbeitet werden und /oder eine Voreinstellung des adaptiven Filters zur Filterung des Empfangssignals verwendet werden.

Die Regel- und Auswerteeinheit kann ferner basierend auf der Klassifikation und/oder der Art eines Ereignisses eine Messrate und/oder eine Signalverarbeitung, insbesondere eine Filterung anpassen.

Die vorliegende Erfindung wird nachfolgend unter Bezugnahme auf die beigefügten Figuren näher erläutert. Es zeigen:
- Figur 1: eine Messanordnung mit einem als Grenzstandsensor ausgebildeten vibronischen Messgerät gemäß dem Stand der Technik,
- Figur 2: ein Ausführungsbeispiel eines als Grenzstandsensor ausgebildeten vibronischen Messgeräts gemäß der vorliegenden Anmeldung und
- Figur 3: ein Ausführungsbeispiel einer Analyseeinheit, wie sie in dem Grenzstandsensor gemäß Figur 2 zum Einsatz kommen kann.

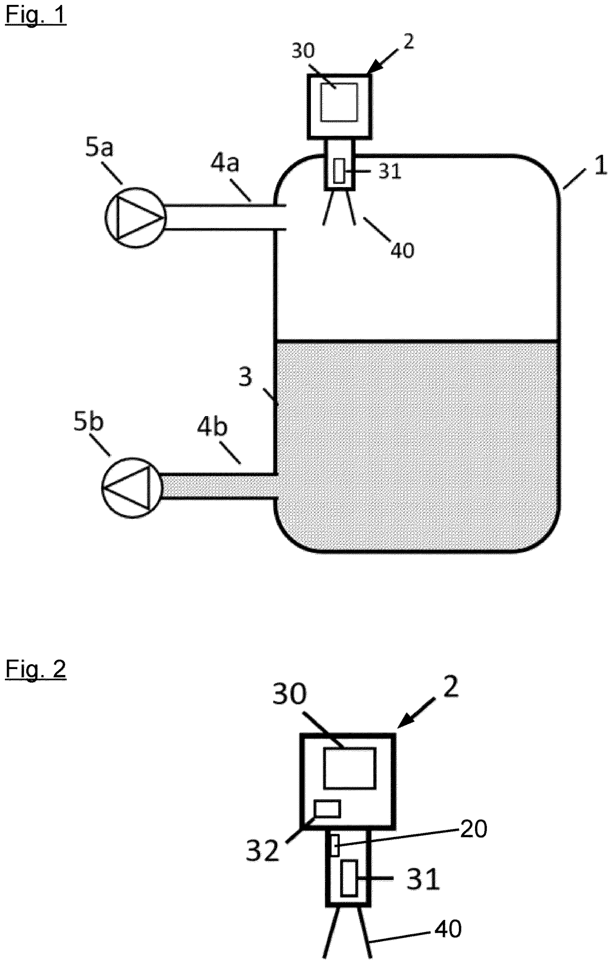

Figur 1 zeigt einen typischen Anwendungsfall eines vibronischen Messgeräts 2 als vibronischen Grenzstandsensors 2 gemäß dem Stand der Technik.

Der Grenzstandsensor 2 ist als Überfüllsicherung in einem Tank 1 verbaut. Eine Befüllung des Tanks 1 über einen in einem oberen Bereich des Tanks 1 angeordneten Zulauf 4a wird über eine Pumpe 5a bewirkt und ist über den Grenzstandsensor 2 gesteuert. Erkennt der Grenzstandsensor 2 ein Medium 3, so wird die Pumpe 5a ausgeschaltet, um ein Überlaufen des Tanks 1 zu verhindern. Der Grenzstandsensor 2 nutzt hier einen piezoelektrischen Antrieb als elektromechanischen Wandler, der als Antriebs- und Empfangseinheit 31 wirkt. Alternativ sind auch elektromagnetische Wandlereinheiten möglich. Über den elektromechanischen Wandler wird eine mechanisch schwingfähige Einheit 40 auf ihrer Resonanzfrequenz angeregt. Über die Resonanzfrequenz und die Amplitude der Schwingung kann der Sensor das Vorhandensein eines Mediums 3 detektieren.

Eine Entleerung des Tanks 1 erfolgt über einen in einem unteren Bereich, nahe eines Bodens des Tanks 1 angeordneten Ablauf 4b wird über eine zweite Pumpe 5b bewirkt.

Übertragen sich Vibrationen der Pumpe 5a auf den Grenzstandsensor 2 kann es in ungünstigen Fällen passieren, dass der Grenzstandsensor 2 diese Vibrationen als Messsignal wahrnimmt. Dadurch kann es zu einer Fehlfunktion des Grenzstandsensor 2 kommen. Liegen die Vibrationen der Pumpe 5a in einem Bereich, welcher der Grenzstandsensor 2 als bedeckt erkennen würde, kann ein falsches Schaltsignal ausgegeben werden. Liegen die Vibrationen in einem Bereich, welche der Grenzstandsensor 2 als unbedeckt erkennen würde, kann das Überschreiten des Grenzstands nicht detektiert werden, was im schlimmsten Fall eine Überfüllung des Tanks 1 zur Folge hat.

Figur 2 zeigt einen Grenzstandsensor 2 gemäß der vorliegenden Anmeldung.

In dem Grenzstandsensor 2 ist eine Analyseeinheit 32 integriert, welche Fremdvibrationen erkennen kann. Die Analyseeinheit 32 ist mit einem Vibrationssensor 20 gekoppelt, der im vorliegenden Ausführungsbeispiel als Inertialsensor ausgebildet ist. Der Vibrationssensor 20 ist in dem Grenzstandsensor 2 derart angeordnet, dass er einerseits mechanisch von der mechanisch schwingfähigen Einheit 40 entkoppelt ist, andererseits aber mit einem Gehäuse des Grenzstandsensors 2 mechanisch derart gekoppelt ist, dass auf den Grenzstandsensor 2 wirkende Fremdschwingungen möglichst gut erfasst werden können. Der Vibrationssensor 20 ist idealerweise im Bereich eines Prozessanschlusses 35 des Grenzstandsensors 2 angeordnet, sodass von dem Vibrationssensor 20 möglichst nur die Fremdvibrationen welche auf den Grenzstandsensor 2 wirken ausgewertet werden. Ohne mechanische Entkopplung können die Schwingungen der mechanisch schwingfähigen Einheit 40, welche durch die Antriebseinheit 31 erzeugt werden, nicht von Fremdvibrationen unterschieden werden.

Eine mechanische Entkopplung ist bereits dann erreicht, wenn die für die Messung von der Antriebseinheit 31 erzeugten mechanischen Schwingungen deutlich reduziert, insbesondere mit einer um einen Faktor 5, bevorzugt um einen Faktor 10 reduzierten Amplitude an dem Vibrationssensor 20 anliegen. Eine vollständige mechanische Entkopplung ist aufgrund der Anordnung im gleichen Gehäuse nicht möglich.

Eine Weiterverarbeitung der Ausgangssignale der Analyseeinheit 32 findet in der Regel- und Auswerteeinheit 30 statt. Die Analyseeinheit 32 kann auch in die Regel- und Auswerteeinheit 30 integriert sein.

Eine Funktion der Analyseeinheit 32 ist vorliegend durch integrierte künstliche Intelligenz unterstützt. Dabei können verschiedene Funktionen zur Verbesserung, Stabilisierung oder Anpassung der Messfunktion der Regel- und Auswerteeinheit 30 realisiert werden.

Im vorliegenden Ausführungsbeispiel sind der Analyseeinheit 32 das elektrische Empfangssignal Sε, das Sensorsignal Ss und das elektrische Anregungssignal S_{A} jeweils im Zeitbereich als auch nach einer schnellen Fouriertransformation im Spektralbereich als Eingangssignale zugeführt. Als weiteres Eingangssignal ist der Analyseeinheit 32 ein Temperatursignal T eines angrenzend zur mechanisch schwingfähigen Einheit 40 angeordneten Temperatursensors zugeführt.

Als Ausgangssignal stellt die Analyseeinheit 32 eine Zuverlässigkeitsinformation Z, die eine Qualität und Zuverlässigkeit des Empfangssignals S_{E} kennzeichnet, Filterparameter zur Einstellung eines adaptiven Filters, sowie eine Information über eine Regelmäßigkeit einer Störung durch Fremdschwingungen zur Verfügung.

Abhängig von der Zuverlässigkeitsinformation Z wird das durch die Regel- und Auswerteeinheit 30 als valide oder unzuverlässig gekennzeichnet. Die Einstellung des adaptiven Filters ermöglicht einer Verbesserung der Zuverlässigkeitsinformation Z. Durch die Information über eine Regelmäßigkeit der Störung durch Fremdschwingungen kann bei regelmäßig wiederkehrenden Störungen bereits im Vorfeld der Störung eine Gegenmaßnahme eingeleitet werden, bspw. eine Erhöhung der Messrate durchgeführt, die Filtereinstellung angepasst und/oder eine Beeinflussung der Eigenschwingung durch die Fremdschwingung reduziert werden, bspw. durch Erhöhung einer Amplitude des Anregungssignals S_{A}, oder Anregung einer weniger oder nicht beeinflusste Eigenschwingung der mechanisch schwingfähigen Einheit 40.

Es sind auch weitere Funktionen denkbar. Ist die Pumpe 5a nicht dauerhaft in Betrieb, sondern nur sporadisch, so kann dies durch die KI erkannt werden. Werden die Vibration der Pumpe 5a erkannt, so kann daraufhin die Messrate des Grenzstandsensors 2 erhöht werden, um dadurch ein Erreichen eines maximalen Füllstands sicherer und schneller zu detektieren. In einer alternativen Ausgestaltung wäre es auch denkbar, dass Messung und Pumpe 5a durch eine gemeinsame Steuereinheit gesteuert werden. In diesem Szenario können sich die Betriebszeiten von Pumpe und Messung abwechseln. So kann über den Sensor in einer Pause des Pumpvorgangs überprüft werden, ob weiter gepumpt werden darf.

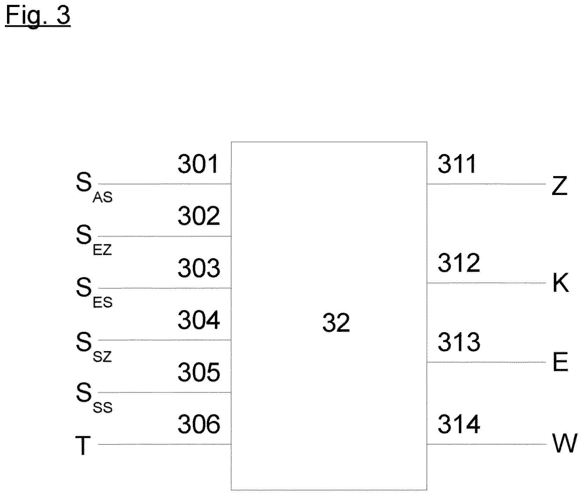

Figur 3 zeigt ein Ausführungsbeispiel einer Analyseeinheit 32, wie sie in dem Grenzstandsensor 2 gemäß Figur 2 zum Einsatz kommen kann.

Die Analyseeinheit 32 gemäß Figur 3 weist in der in Figur 3 gezeigten, vereinfachten Darstellung sechs Signaleingänge 301-306 und vier Signalausgänge 311-314 auf.

An dem ersten Signaleingang 301 ist der Analyseeinheit 32 das Anregungssignal S_{A} im Spektralbereich S_{AS} zugeführt. An dem zweiten und dritten Signaleingang 302, 303 liegt das Empfangssignal Sε im Zeitbereich S_{EZ} und im Spektralbereich S_{ES} an. An dem vierten und fünften Signaleingang 304, 305 liegt das Sensorsignal Ss im Zeit- und im Spektralbereich Ssz, Sss an. An dem sechsten Signaleingang 306 ist das Temperatursignal T des Temperatursensors angelegt.

An dem ersten Signalausgang 301 ist die Zuverlässigkeitsinformation Z abgreifbar. An dem zweiten Signalausgang 302 ist ein Klassifikator K für Fremdschwingungen abgreifbar. An dem dritten Signalausgang 303 ist ein Einstellsignal E zur Einstellung des adaptiven Filters abgreifbar und an dem vierten Signalausgang 304 ist eine Signal Warnsignal abgreifbar, das zusätzlich zu der Zuverlässigkeitsinformation Z eine Warnung repräsentiert, wenn die Qualität des Eingangssignals im Vergleich zu Fremdschwingungen, bspw. im Sinne einer Signal to Noise Ratio unter einen Schwellenwert sinkt.

### Bezugszeichenliste

- 1: Behälter, Tank
- 2: vibronisches Messgerät/ Grenzstandsensor
- 3: Medium
- 4a: Zulauf
- 4b: Ablauf
- 5a: Pumpe
- 5b: Pumpe
- 20: Vibrationssensor
- 30: Regel- und Auswerteeinheit
- 31: Antriebs- und Empfangseinheit
- 32: Analyseeinheit

- 40: mechanisch schwingfähige Einheit

- 301-306: Signaleingänge
- 311-314: Signalausgänge

- E: Einstellsignal
- K: Klassifikator

- S_{A}: Anregungssignal
- S_{E}: Empfangssignal
- Ss: Sensorsignal

- T: Temperatursignal
- W: Warnsignal
- Z: Zuverlässigkeitsinformation

## Patentansprüche

1. Vibronisches Messgerät (2), insbesondere Grenzstandsensor (2) zur Bestimmung und/oder Überwachung mindestens einer Prozessgröße eines Mediums (3) in einem Behälter (1), mit mindestens einer mechanisch schwingfähigen Einheit (40), mit mindestens einer Antriebs- und Empfangseinheit (31) zur Anregung der mechanisch schwingfähigen Einheit (40) zu mechanischen Schwingungen mittels eines elektrischen Anregungssignals S_{A} und zum Empfangen und Umwandeln von mechanischen Schwingungen in ein elektrisches Empfangssignal (S_{E}),
und mit mindestens einer Regel- und Auswerteeinheit (30) zur Regelung und/ oder Steuerung der Schwingungsanregung und zur Auswertung des Empfangssignals S_{E} in Bezug auf die Prozessgröße, wobei das vibronische Messgerät (2) wenigstens einen Vibrationssensor (20) aufweist, der derart mit dem vibronischen Messgerät (2) gekoppelt ist, dass Schwingungen von dem Messgerät (2) auf den Vibrationssensor (20) übertragen werden, wobei an dem Vibrationssensor (20) ein Sensorsignal (Ss) abgreifbar ist,
**dadurch gekennzeichnet, dass**
das vibronische Messgerät (2) eine Analyseeinheit (32) aufweist, die mit der Regel- und Auswerteeinheit (30) verbunden ist, wobei
der Analyseeinheit (32) das elektrische Empfangssignal (Sε) und das Sensorsignal (Ss) als Eingangssignale zugeführt sind,
die Analyseeinheit (32) als Einheit zur selbstlernenden Analyse der ihr zugeführten Eingangssignale ausgebildet ist und
die Analyseeinheit (32) der Regel- und Auswerteeinheit (30) wenigstens eine Zuverlässigkeitsinformation für das elektrische Empfangssignal (Sε) übermittelt.

2. Vibronisches Messgerät (2) gemäß Patentanspruch 1,
**dadurch gekennzeichnet, dass**
der Analyseeinheit (32) das elektrische Empfangssignal Sε und/oder das Sensorsignal (Ss) im Zeitbereich (Ssz) und im Spektralbereich (Sss) zugeführt sind.

3. Vibronisches Messgerät (2) gemäß einem der vorhergehenden Patentansprüche,
**dadurch gekennzeichnet, dass**
der Analyseeinheit (32) ein Temperaursignal (T) als weiteres Eingangssignal zugeführt ist.

4. Vibronisches Messgerät (2) gemäß einem der vorhergehenden Ansprüche,
**dadurch gekennzeichnet, dass**
die Analyseeinheit (32) zur Erkennung periodischer Ereignisse ausgebildet ist.

5. Vibronisches Messgerät (2) gemäß einem der vorhergehenden Ansprüche,
**dadurch gekennzeichnet, dass**
die Analyseeinheit (32) zur Erkennung von Frequenzmustern ausgebildet ist.

6. Vibronisches Messgerät (2) gemäß einem der vorhergehenden Ansprüche,
**dadurch gekennzeichnet, dass**
die Analyseeinheit (32) geeignet ausgebildet ist, basierend auf der Analyse ein Warnsignal (W) zu generieren und auszugeben, wenn eine Qualität eines aus dem elektrischen Empfangssignal (Sε) extrahierbaren Nutzsignals zu gering ist.

7. Vibronisches Messgerät (2) gemäß einem der vorhergehenden Ansprüche,
**dadurch gekennzeichnet, dass**
die Analyseeinheit (32) der Regel- und Auswerteeinheit (30) ein Signal zur Einstellung wenigstens eines adaptiven Filters für das Empfangssignal (Sε) ausgibt.

8. Vibronisches Messgerät (2) gemäß einem der vorhergehenden Ansprüche,
**dadurch gekennzeichnet, dass**
die Analyseeinheit (32) derart ausgebildet ist, dass sie Fremdvibrationen verursachende Ereignisse erkennt und klassifiziert und der Regel- und Auswerteeinheit (30) eine Klassifikator (K) zur Verfügung stellt.

9. Vibronisches Messgerät (2) gemäß einem der vorhergehenden Ansprüche,
**dadurch gekennzeichnet, dass**
die Regel- und Auswerteeinheit (30) derart ausgebildet ist, dass sie basierend auf der Klassifikation eines Ereignisses eine Messrate und/oder eine Signalverarbeitung, insbesondere eine Filterung anpasst.

10. Verfahren zur Signalverarbeitung in einem vibronischen Messgerät (2) gemäß einem der vorhergehenden Ansprüche,
**dadurch gekennzeichnet, dass**
das elektrische Empfangssignal (Sε) und das Sensorsignal Ss der Analyseeinheit (32) als Eingangssignale zugeführt werden und
die Analyseeinheit (32) der Regel- und Auswerteeinheit (30) wenigstens eine Zuverlässigkeitsinformation (Z) für das elektrische Empfangssignal (Sε) übermittelt, wobei
die Analyseeinheit (32) die ihr zugeführten Eingangssignale selbstlernend analysiert.

11. Verfahren gemäß Anspruch 10,
**dadurch gekennzeichnet, dass**
der Analyseeinheit (32) das elektrische Empfangssignal Sε und/oder das Sensorsignal (Ss) im Zeitbereich (S_{EZ}) und im Spektralbereich (S_{ES}) zugeführt werden.

12. Verfahren gemäß einem der Patentansprüche 10 oder 11,
**dadurch gekennzeichnet, dass**
der Analyseeinheit (32) ein Temperaursignal (T) als weiteres Eingangssignal zugeführt wird.

13. Verfahren gemäß einem der Patentansprüche 10 bis 12,
**dadurch gekennzeichnet, dass**
die Analyseeinheit (32) eine Erkennung periodischer Ereignisse durchführt.

14. Verfahren gemäß einem der Patentansprüche 10 bis 13,
**dadurch gekennzeichnet, dass**
die Analyseeinheit (32) eine Erkennung von Frequenzmustern durchführt.

15. Verfahren gemäß einem der Patentansprüche 10 bis 14,
**dadurch gekennzeichnet, dass**
die Analyseeinheit (32) basierend auf der Analyse ein Warnsignal (W) generiert und ausgibt, wenn eine Qualität eines aus dem elektrischen Empfangssignal (Sε) extrahierbaren Nutzsignals zu gering ist.

16. Verfahren gemäß einem der Patentansprüche 10 bis 15,
**dadurch gekennzeichnet, dass**
die Analyseeinheit (32) der Regel- und Auswerteeinheit (30) ein Signal zur Einstellung wenigstens eines adaptiven Filters für das Empfangssignal (Sε) ausgibt.

17. Verfahren gemäß einem der Patentansprüche 10 bis 16,
**dadurch gekennzeichnet, dass**
die Analyseeinheit (32) Fremdvibrationen verursachende Ereignisse erkennt und klassifiziert und eine Information darüber, insbesondere einen Klassifikator, ausgibt.

18. Verfahren gemäß einem der Patentansprüche 10 bis 17,
**dadurch gekennzeichnet, dass**
die Regel- und Auswerteeinheit (30) basierend auf der Klassifikation und/oder der Art eines Ereignisses eine Messrate und/oder eine Signalverarbeitung, insbesondere eine Filterung anpasst.
